# EUROPEAN PATENT APPLICATION

(11) **EP 0 570 865 A2**
(43) Date of publication of application: **24.11.1993**
(21) Application number: 93107902.4
(22) Date of filing: 14.05.1993
(51) Int. Cl.: G06F 15/16, H04L 12/42, G06F 13/38

(54) **Method and apparatus for interfacing a station in a token ring network**

(30) Priority: 18.05.1992 US 884728
(71) Applicant: NETWORK CONTROLS INTERNATIONAL, INC., Charlotte, North Carolina 28217-2202 (US)
(72) Inventor: Propst, Edward R., Jr., Denver, North Carolina 28037 (US); Collins, John D., Charlotte, North Carolina 28211 (US)
(74) Representative: Liesegang, Roland, Dr.-Ing.

(57) **Abstract**

In a token ring computer network, an adapter is able to interface stations in a variety of configurations. The adapter has two operating modes, one in which an internal relay circuit functions as an integral trunk coupling unit, and another in which an external trunk coupling unit is used. The ability to operate in these two modes facilitates interfacing with networks using star topology, loop topology, or a hybrid of the two. A cable assembly facilitates connection of a network without external trunk coupling units using a series of adapters in the "internal trunk coupling unit" operating mode.

## Description

### BACKGROUND OF THE INVENTION

### 1. Field of the Invention

This invention relates to communications networks for computers and more specifically to interfaces for token ring configurations of local area networks.

### 2. Description of the Related Art

In a token ring network configuration, a communications medium transports data signals between successive stations of a baseband ring local area network. This communications medium consists of a set of trunk coupling units (TCUs) interconnected sequentially by trunk cable links. Typically, the TCUs are grouped into multistation access units (MAUs) with a fixed number of TCUs per MAU. Each TCU contains one token ring adapter node. At each node is a medium interface connector (MIC) which supports attachment of a station. Conventionally, each station is connected to its MIC by way of a medium interface cable and a token ring adapter.

Each MAU also has two trunk MICs, labeled Rᵢ (ring in) and Rₒ (ring out), which are used to interconnect with one or more other MAUs via the trunk cables. The MAUs are daisy-chained together, so that the Rₒ of the first MAU is connected to the Rᵢ of the second MAU, the Rₒ of the second MAU is connected to the Rᵢ of the third MAU, and so on. The details of the implementation may be found in IEEE Standards Document "IEEE 802.5".

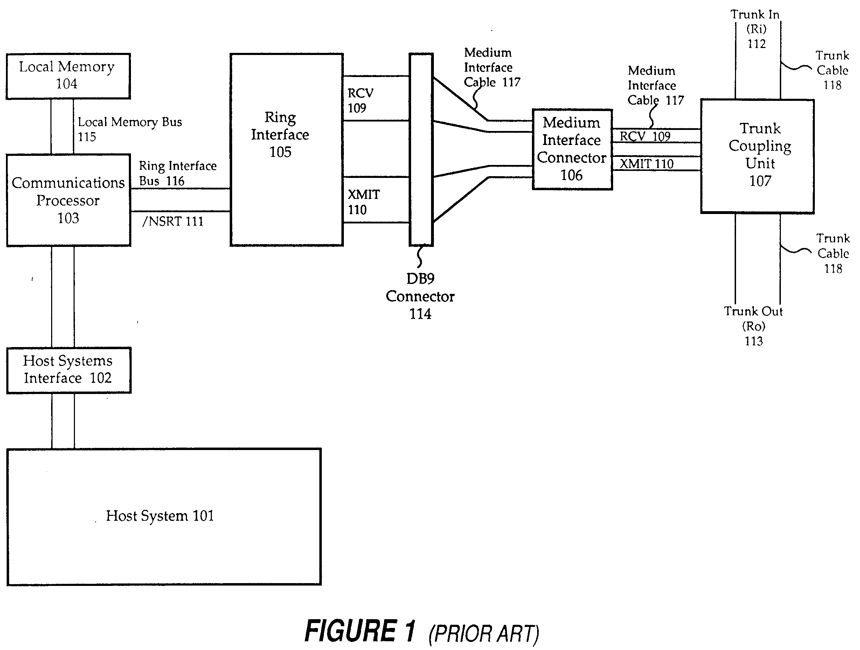

Referring now to the prior art depicted in Fig. 1, a token ring adapter is shown, including a communications processor 103 (CP), host system interface 102 (HSI), a local memory 104 (LM), and a ring interface 105 (RI). The LM 104 contains microcode to be processed by the CP 103 to implement IEEE 802.5 MAC and 802.2 LLC token ring protocol. The LM 104 is connected to the CP 103 by way of a local memory bus 115, and the CP 103 is connected to the RI 105 by way of a ring interface bus 116. One line of the ring interface bus 116 is an /NSRT signal line 111.

The RI 105 is connected through a standard DB9 connector 114 and a medium interface cable 117 to the MIC 106, which is in turn connected to a TCU 107 (usually part of an MAU). The TCU 107 is connected to the trunk cable 118 of the network, with one terminal of the TCU 107 connected to Rᵢ 112 and the other terminal connected to Rₒ 113.

Stations connected to the TCU 107 are inserted into the token ring network as follows. When a station is to be inserted, the host system 101 sends a command to the CP 103 to insert. Before insertion proceeds, a verification process occurs, in which the CP 103 transmits a message through the RI 105 to the XMIT signal lines 110, the message goes over the MIC 106 to the TCU 107, and the TCU 107 wraps the message back to the RCV signal lines 109. If the signal is received correctly, the process continues.

Next, the CP 103 sends an active /NSRT signal 111 to the RI 105. When the RI 105 receives the active /NSRT signal 111, it generates a phantom DC voltage and impresses it across the RCV 109 and XMIT 110 signal lines. This DC voltage activates an insertion/bypass relay within the TCU 107 which connects Rᵢ 112 to the RCV line 109 and Rₒ 113 to the XMIT line 110. Thus, the station is inserted into the token ring.

The CP 103 monitors conditions on the network and, if commanded by the host system 101 to remove the station from the token ring, the CP 103 deactivates the /NSRT signal 111. The RI continuously monitors the /NSRT line 111, and if it does not observe a new active signal within a period of time spedfied by an internal watchdog timer, it assumes the CP 103 is no longer functioning and removes the DC voltage. When the voltage is removed, the TCU's insertion/bypass relay is deactivated, disconnecting the TCU 107 from the trunk lines and causing token ring signals to bypass the station.

In a typical configuration, where the TCU 107 is part of an MAU, each node in the MAU contains a relay for connecting and disconnecting the station attached to the corresponding node. The Rᵢ and Rₒ connection points, however, do not have relays and are never bypassed.

Several wiring configurations are known in the art for implementing token ring schemes of the type described above. One well-known type of wiring which facilitates a star-topology MAU structure is called shielded twisted pair (STP) wiring. This consists of two sets of twisted pairs of shielded, 22-gauge, single strand wires of 150-ohm impedance. One of the pairs of signal wires is included in the trunk cable between MAUs as a backup signal path. Each MAU in the token ring loop has a number of nodes for attachment to stations through MICs. New stations are added by connecting to a free node in one of the MAUs. When all MAU nodes are filled, a new MAU must be inserted into the ring before new stations can be added. The term "star topology" refers to the star-shaped configuration formed by each central MAU having a number of cables radiating outward to connect to stations. Similar star-topology configurations can be formed using unshielded twisted pair (UTP) or other types of wiring.

An alternative to star topology is loop topology. In typical loop topology, stations connect to the loop without going through an MAU. One example of loop topology is the BLOOP wiring system which is used in the IBM 4700 automation system, employed by about one-fourth of existing bank branch offices for their computer networks. BLOOP wiring consists of a single twisted pair of shielded, 22-gauge multi-strand wires of 50-ohm impedance at 1 MHz A second pair of signal wires is not provided for. In the loop topology, all terminals connect into the wiring scheme by a daisy chain loop configuration. New stations are added by opening the loop and inserting the new station where the opening was made.

Under the prior art, the two wiring schemes are incapable of interfacing with each other. Thus, in order to implement a star-topology MAU-based scheme into a system employing BLOOP wiring, the BLOOP wiring needs to be discarded and replaced by star configuration wiring such as STP wiring. Such a conversion mandates considerable expense and effort.

### SUMMARY OF THE INVENTION

The present invention is directed towards providing a token ring adapter which is capable of supporting a token ring network scheme on either star topology (such as STP) , loop topology (such as BLOOP), or a hybrid of the two. This is accomplished by integrating the TCU into the adapter. The adapter can be made even more flexible by rendering it configurable to work with either star or loop topology. A logic circuit controls whether the insertion mechanism is to operate in a standard mode or if it is to operate in a modified mode wherein the TCU function is integrated into the adapter. Thus, many configuration options become available, as are set forth in the description of the preferred embodiment.

The invention is further directed towards providing a cable for attachment of several token ring adapters using their internal TCUs, for constructing a network without using MAUs.

Accordingly in this invention there is provided an architecture and method for interfacing a token ring scheme into existing star and loop wiring systems.

A further aspect of this invention is that it facilitates addition of a station to a network even when all MAUs are fully populated, without having to add another MAU.

A further aspect of the invention is that the single adapter of the invention can be used to satisfy a variety of cabling arrangements.

These aspects and features of the invention are further described hereinafter by way of example and with reference to the accompanying drawings.

### BRIEF DESCRIPTION OF THE DRAWINGS

Fig. 1 is a block diagram of a station attached to a token ring network according to the prior art.

Fig. 2 is a block diagram of the token ring adapter in its initial state connected to a standard STP token ring network configuration.

Fig. 3 is a block diagram of the token ring adapter in a non-inserted state connected to a standard STP token ring network configuration.

Fig. 4 is a block diagram of the token ring adapter in an inserted state connected to a standard STP token ring network configuration.

Fig. 5 is a block diagram of the token ring adapter in a non-inserted state connected to a BLOOP network configuration.

Fig. 6 is a block diagram of the token ring adapter in an inserted state connected to a BLOOP network configuration.

Fig. 7 is a flow chart of the operation of the token ring adapter.

Fig. 8 is a block diagram showing a cable assembly allowing for the implementation of a token ring network without MAUs using several token ring adapters.

Fig. 9 is a block diagram of a standard token ring wiring configuration using STP cable.

Fig. 10 is a block diagram of a standard token ring wiring configuration using STP cable, where an additional station is interfaced using an integrated TCU.

Fig. 11 is a block diagram of a four-station small network using STP cable, interfaced without using MAUs.

Fig. 12 is a block diagram of a six-station small network using BLOOP cable, interfaced without using MAUs.

Fig. 13 is a block diagram of a BLOOP network using BLOOP cable tied to a standard MAU using STP cable.

Fig. 14 is a block diagram of a network containing a single fully-populated MAU and an additional station.

### DESCRIPTION OF THE PREFERRED EMBODIMENT

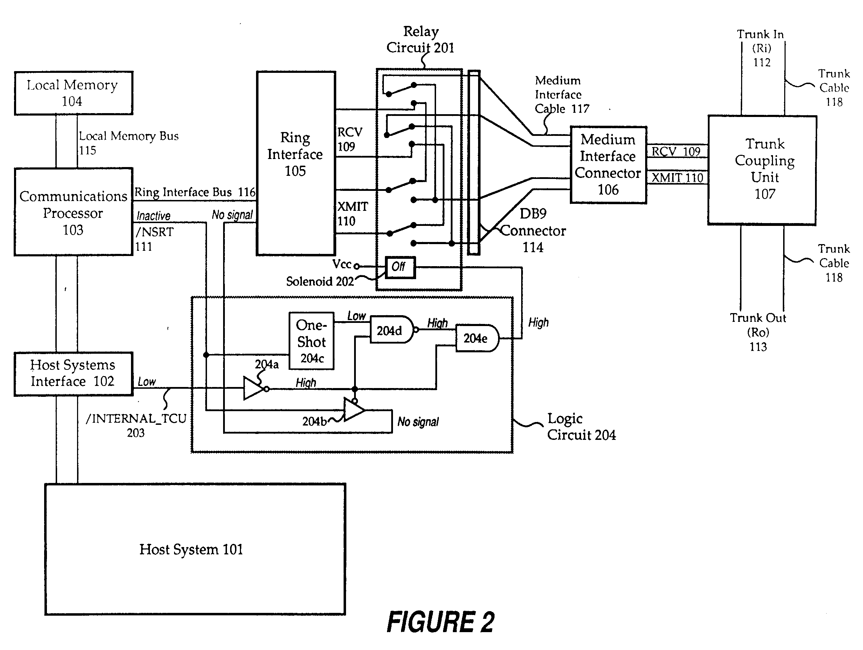

Referring now to Fig. 2, there is shown a block diagram of the preferred embodiment of the token ring adapter in its initial state, connected to a standard (STP) token ring network with a medium interface connector (MIC) 106 and an external trunk coupling unit (TCU) 107. The adapter includes a communications processor (CP) 103 for handling communications between the host system 101 and the rest of the network, a host system interface (HSI) 102, a logic circuit 204, a local memory (LM) 104 containing commands for the CP 103 and connected to the CP 103 by a local memory bus 115, and a ring interface (RI) 105. The RI 105 is connected to the MIC 106 through a relay circuit 201 which selectively establishes the physical connections appropriate for the desired mode of the system. The CP 103 is connected to the RI 105 by a ring interface bus 116.

The relay circuit 201 provides the mechanism by which the station is selectively inserted and bypassed with respect to the network. In essence, the relay circuit acts as an internal TCU, performing the function formerly performed by the insertion/bypass relay of the prior art's external TCU. The relay circuit 201 is controlled by a solenoid 202, which is in turn controlled by the output of the logic circuit 204. Alternatively, a relay coil or other switching device may be used in place of the solenoid 202.

Two signals drive the logic circuit: /NSRT 111, a signal produced by the CP 103, indicates when the station is to be connected to the network (in the preferred embodiment, active means inserted and inactive means not inserted); and /INTERNAL_TCU 203, a signal produced by the HSI 102, indicates whether the connection is to be made using an external or internal TCU (in the preferred embodiment, high means external and low means internal).

Fig. 2 shows the adapter in its initial state, connected to a standard STP wiring scheme with an MIC 106 and an external TCU 107. When the adapter is powered on initially, the state of the signal /INTERNAL_TCU 203 is low. Since the station is not yet inserted, the signal /NSRT 111 is inactive. Following the logic circuit 204, we can see that the signal going to the solenoid 202 is high. Therefore, there is no voltage drop across the solenoid 202, and the relay circuit 201 is deactivated. This causes RI 105 to be electrically isolated from the MIC 106; therefore, the station is not inserted. Also, the enable gate 204b in the logic circuit 204 is off, so that /NSRT 111 is not sent to the RI 105.

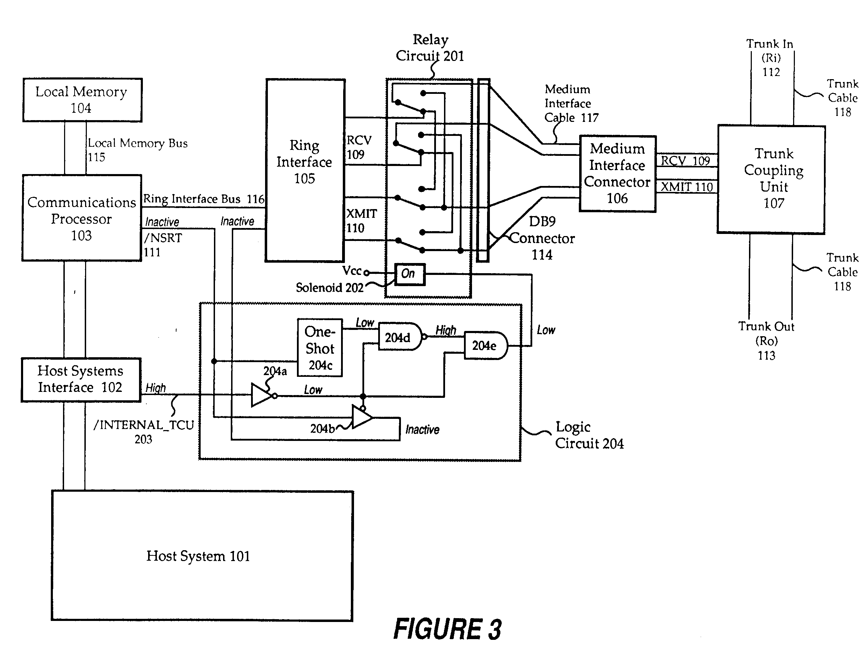

Referring now to Fig. 3, there is shown a situation where the adapter is connected to a STP wiring scheme with an MIC 106 and an external TCU 107, the station is still not inserted, and the host system 101 has specified that the "external TCU" mode is to be used. Therefore, /NSRT 111 is inactive and /INTERNAL_TCU 203 is high. Now the signal going to the solenoid 202 is low, creating a voltage drop across the solenoid 202. The relay circuit 201 is activated, and the RCV and XMIT lines, 109 and 110 of the RI 105 are now connected to the MIC 106. Furthermore, the enable gate 204b is now on, so that /NSRT 111 is passed to the RI 105. The circuit now operates in a similar manner to the prior art shown in Fig. 1. Since /NSRT 111 is inactive, the RI 105 will not generate a phantom DC voltage. Without this DC voltage, the external TCU's insertion/bypass relay will remain deactivated. Thus, the MIC 106 will be bypassed and the station will not be inserted.

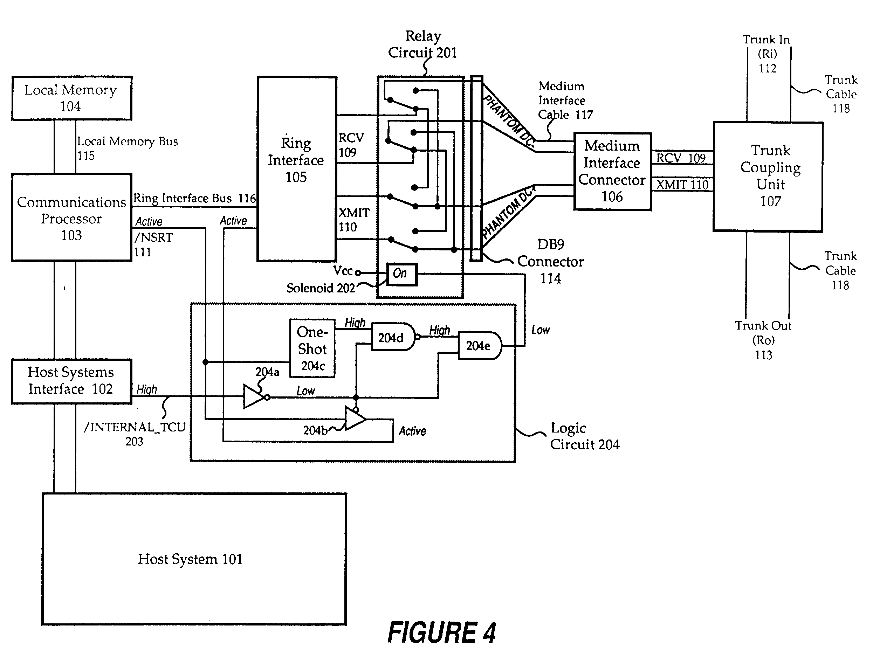

Referring now to Fig. 4, there is shown a situation where the adapter is connected to a STP wiring station with an MIC 106 and an external TCU 107, and the host system 101 has indicated that it is to be inserted using the "external TCU" mode. Therefore, /NSRT 111 now becomes active, while /INTERNAL_TCU 203 stays high. The signal to the solenoid 202 stays low, and the solenoid 202 remains energized. As before, the relay circuit 201 is activated, and the RI 105 is connected to the MIC 106. The enable gate 204b is still on, so /NSRT 111 is passed to the RI 105. Since /NSRT 111 is now active, the RI 105 will generate a phantom DC voltage which is sent across RCV and XMIT, 109 and 110, to the external TCU 107. The external TCU 107, seeing this DC voltage, activates its insertion/bypass relay, and the station is inserted.

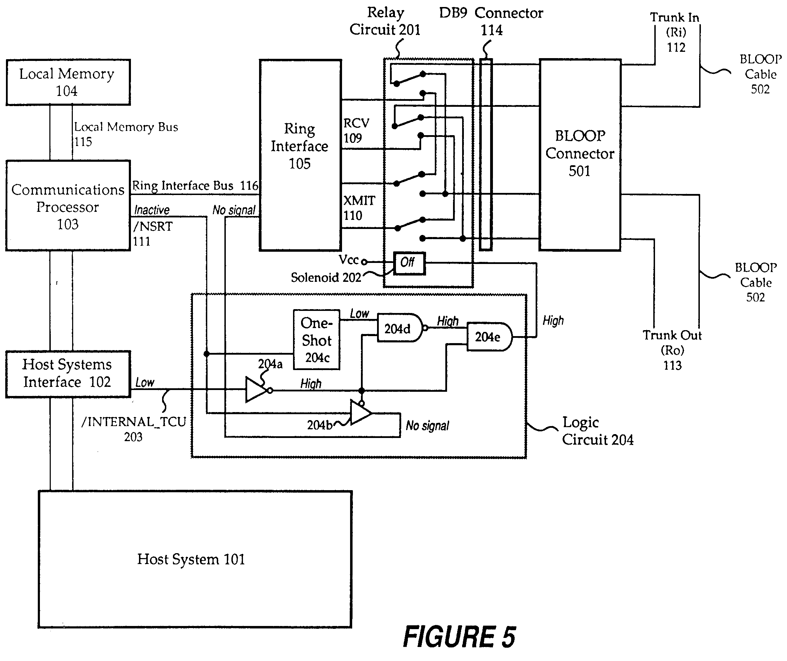

The next two Figures show how the adapter operates with a BLOOP scheme. Referring now to Fig. 5, there is shown a situation where the adapter is connected to a BLOOP wiring scheme with no external TCU. A BLOOP connector 501, typically a pair of standard phono jack connectors, is used to connect the DB9 connector 114 to a BLOOP cable 502.

Here, the station is not inserted, but the "internal TCU" mode has been specified. Therefore, /NSRT 111 is inactive and /INTERNAL_TCU 203 is low. The state of the adapter is exactly the same as it was in Fig. 2: The signal to the solenoid 202 is high, the solenoid 202 is de-energized, and the relay circuit 201 is deactivated. Therefore, Rᵢ 112 is shorted to Rₒ 113, and the RI 105 is electrically isolated from the network. Thus, the station is not inserted.

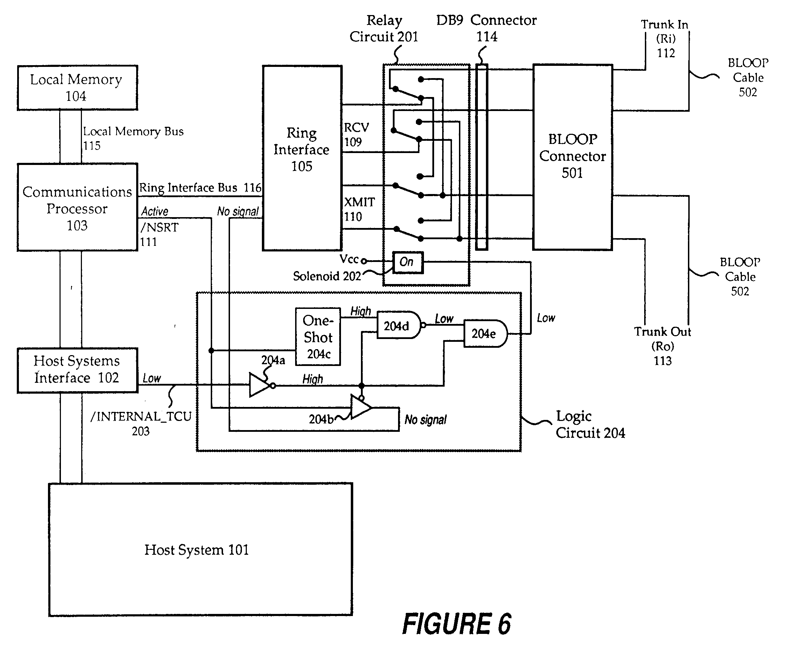

Referring now to Fig. 6, there is shown a situation where the adapter is connected to a BLOOP wiring scheme through a BLOOP connector 501, and the host system 101 has indicated that it is to be inserted. Since there is no external TCU, the "internal TCU" mode will be used. Therefore, /NSRT 111 is active and /INTERNAL_TCU 102 is low. The signal to the solenoid 202 is low, energizing the solenoid 202 and activating the relay circuit 201. The RI 105 is now connected to the network, and the station is inserted. Since the enable gate 204b is off, the RI 105 does not see the /NSRT signal 111 and does not generate a phantom DC voltage, which would be undesirable for this configuration because the DC voltage, if generated, would go directly onto the BLOOP cable 502.

The purpose of the one-shot 204c now becomes evident. The output of the one-shot 204c remains high only if /NSRT 111 continues to pulse. If /NSRT 111 stays low or stays high without pulsing, the one-shot's output will go low and the relay circuit 201 will be deactivated. In this way, the one-shot 204c is used to perform the watchdog timer function previously performed within the RI 105.

Note that, in Figs. 5 and 6, the function formerly performed by the insertion/bypass relay in the external TCU is now being performed by the relay circuit 201 in the adapter. In this manner, insertion and removal can be performed without an external TCU.

In addition, an impedance-matching device is incorporated in the cable to match the impedance of BLOOP cables (STP cabling has an impedance of 150 ohms, while BLOOP cabling has an impedance of 50 ohms). Optionally, this matching circuitry could be integrated into the adapter and selected via jumpers.

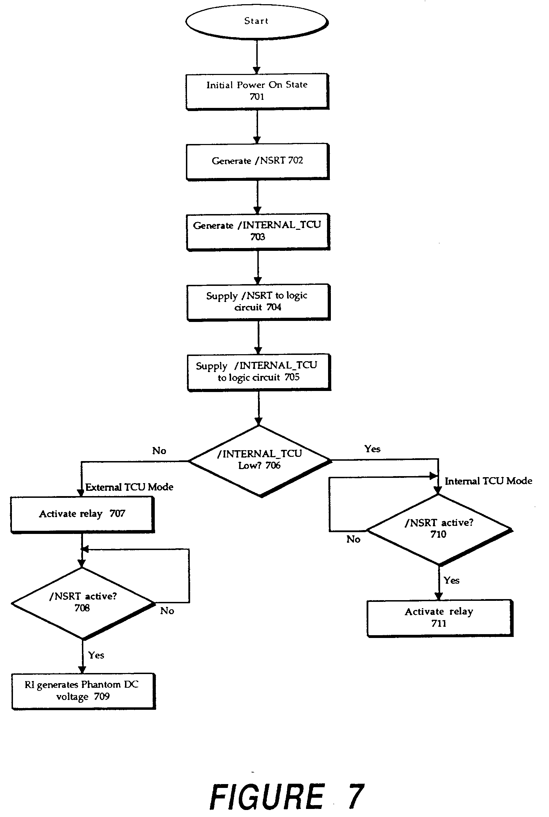

Referring now to Fig. 7, there is shown a flow chart of the method of operation of the adapter. In step 701, power is applied to the system and /INTERNAL_TCU is sent low, as was shown in Fig. 2. In step 702, the CP generates the /NSRT signal, which will become active when the station is to be inserted. In step 703, the HSI generates the /INTERNAL_TCU signal to indicate whether the internal or external TCU mode will be used. Step 704 indicates that /NSRT is to be supplied to the logic circuit, and step 705 indicates that /INTERNAL_TCU is also to be supplied to the logic circuit. In step 706, the logic circuit checks the state of /INTERNAL_TCU. If it is low, the "internal TCU" mode is to be used, and the logic circuit proceeds with step 710. If it is high, the "external TCU" mode is to be used, and the logic circuit proceeds with step 707.

In step 707, the "external TCU" mode proceeds. In step 707, the relay circuit is activated, connecting the RI to the MIC. Now the system works in a manner similar to the prior art. In step 708, the RI waits until /NSRT becomes active. Once it becomes active, the RI generates a phantom DC voltage to insert the station into the network.

If, in step 706, /INTERNAL_TCU is low, the "internal TCU" mode is used. In step 710, the logic circuit waits until /NSRT is active. When /NSRT becomes active, in step 711, the relay is activated. Since the /NSRT signal is not sent to the RI in this mode, the RI does not generate a phantom DC voltage in this mode.

In summary, on power-up, /INTERNAL_TCU is low. When the external TCU is to be used (as for STP wiring), /INTERNAL_TCU is high, and the circuit functions essentially as in the prior art. When the internal TCU is to be used (as for BLOOP configuration), /INTERNAL_TCU is low and the /NSRT signal controls the internal TCU relay circuit.

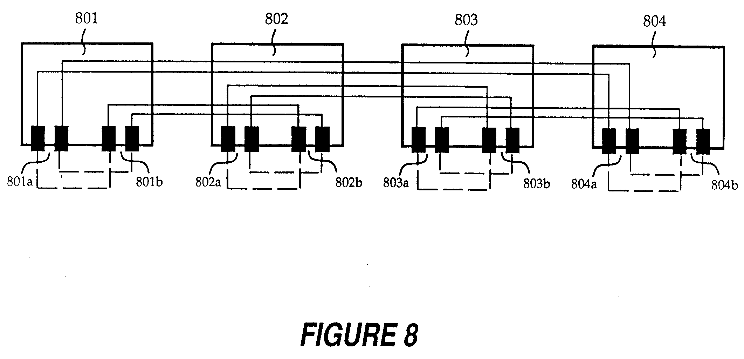

Referring now to Fig. 8, there is shown a cable assembly design which allows for the implementation of a token ring network without MAUs, using several adapters in "internal TCU" mode. The Figure shows an Rᵢ MIC 801 and three node MICs 802,803 and 804. Although three node MICs are shown, any number of node MICs may be used. The MICs are wired so that the RCV pins 801b of the Rᵢ MIC 801 are connected to the RCV pins 802b of node MIC 802; the XMIT pins 802a of node MIC 802 are connected to the RCV pins 803b of node MIC 803; and the XMIT pins 803a of node MIC 803 are connected to the RCV pins 804b of node MIC 804. In general, the XMIT pins of node MIC "j" are connected to the RCV pins of node MIC "j+1". The XMIT pins 804a of the last node MIC 804 are connected to the XMIT pins 801a of the Rᵢ MIC 801. This wiring scheme allows chaining of the cable assemblies; the Rᵢ of a second cable assembly can be attached to the last node MIC of the first cable assembly in order to extend the token ring network to make room for more stations.

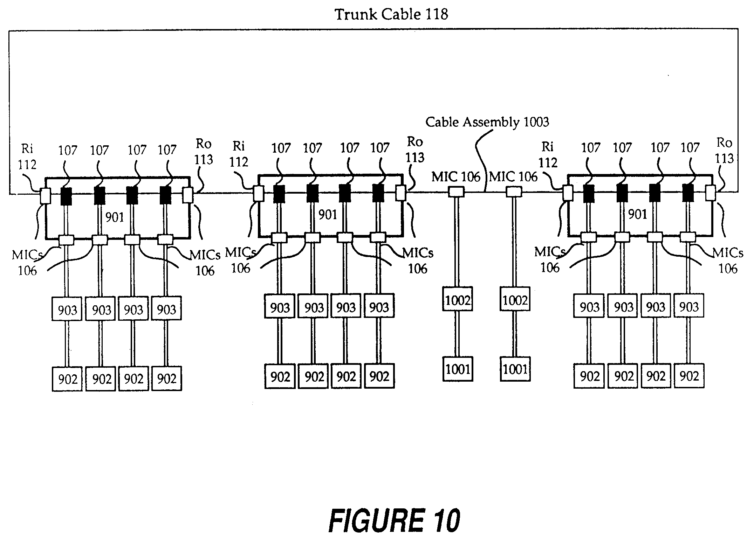

The cable assembly can also be used to attach terminals between existing MAUs. The Rᵢ MIC 801 of the cable assembly is attached to the Rₒ of one MAU, and the last node MIC 804 of the cable assembly is attached to the Rᵢ of the MAU or to the Rᵢ of the next MAU. Terminals can then be attached to other node MICs 802 and 803 using the "internal TCU" mode of the adapters. This configuration is shown in Fig. 10, described more fully below.

Preferably, the MICs have self-shorting pins configured to short each XMIT pin, 801a, 802a, 803a, and 804a, to the corresponding RCV pin 801b, 802b, 803b, and 804b, whenever nothing is attached to that MIC. This is indicated by the dashed lines on the Figure. This feature insures that the network's ring is not broken when one or more MICs have no adapter attached.

When a token ring adapter is connected to one of the MICs, the adapter's internal TCU performs the function of inserting or bypassing the attached station. As described above, when /NSRT goes active, the internal relay energizes and the station is inserted. When /NSRT is inactive, the relay de-energizes and the station is bypassed.

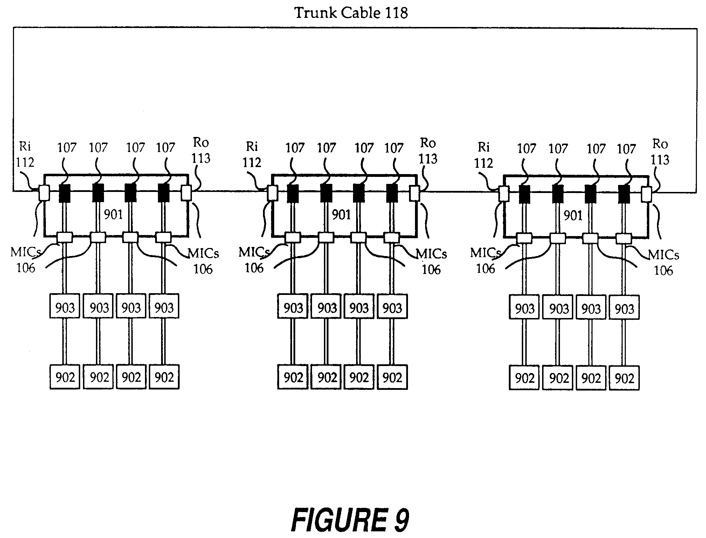

Figs. 9 to 13 show some examples of configurations which may be implemented using the adapter and cable described above.

Fig. 9 shows standard token ring wiring in a star topology using STP cable. There are three MAUs 901 along the trunk cable 118, each MAU having four TCUs 107. Each TCU 107 is connected to a station 902 via an MIC 106 and a token ring adapter 903, for a total of twelve stations 902. The token ring adapters 903 would work in a conventional manner (i.e., in "external TCU" mode), since external TCUs are available in the MAUs 901.

Fig. 10 shows how the invention can be employed to add stations to a network, even when all the MAU nodes in the network are full. The figure shows standard token ring wiring in a star topology using STP cable. Twelve of the stations 902 are connected in the same manner as in Fig. 9, using external TCUs 107. The new stations 1001 are inserted directly into the trunk cable without MAUs. This is done using the internal TCUs of the token ring adapters 1002, connected to the cable assembly 1003 which is described in Fig. 8. Therefore, token ring adapter 1002 would be in "internal TCU" mode.

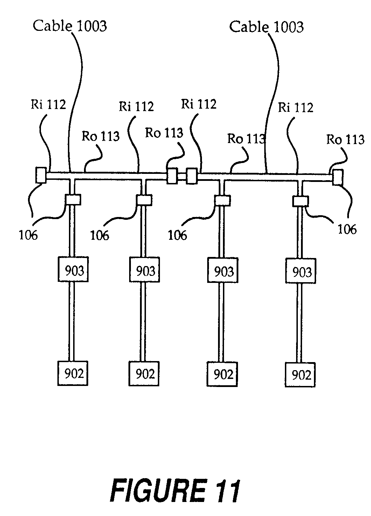

Fig. 11 shows how adapters and cable assemblies can be employed to connect a small network without using any MAUs. The network shown uses two cable assemblies 1003 similar to that shown in Fig. 8, with the last node MIC 804 of one cable connected to the Rᵢ MIC 801 of the second cable. Each station 903 is connected to an adapter 902, and each adapter 902 is in turn connected to an MIC 106 of the cable assembly, without using an MAU. In this configuration, the adapters 902 would be in "internal TCU" mode.

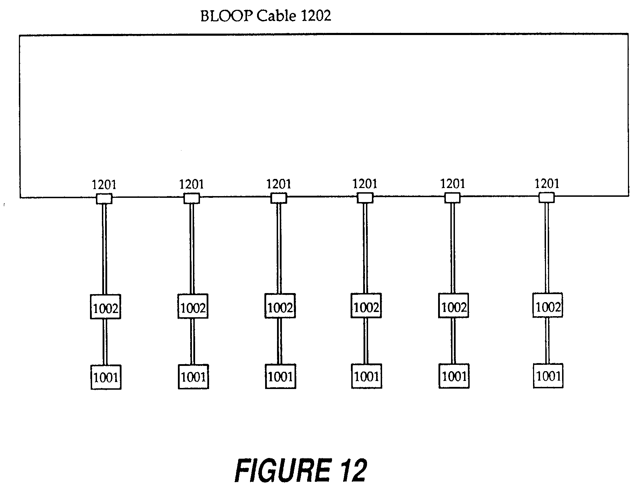

Fig. 12 shows how the adapter can be employed to connect stations to a loop-topology network using BLOOP cable. This network uses BLOOP cable 1202 and BLOOP connectors 1201. An impedance-matching circuit would be employed to connect each adapter to the BLOOP cable. As in Fig. 11, no MAUs are used. The adapters' internal TCUs are used.

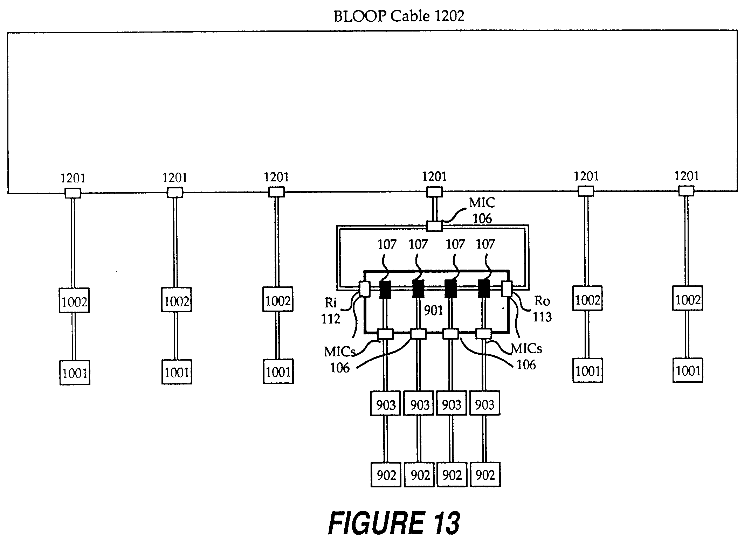

Fig. 13 shows how the adapter can be employed in a hybrid configuration. In this network, there is a BLOOP cable 1202 with five stations 1001 connected through BLOOP connectors 1201 and adapters 1002 using their internal TCUs. For these five stations, impedance-matching circuitry would be employed, as in Fig. 12. Additionally, a standard MAU 901 is employed to connect four more stations 902 to the network. The Rᵢ and Rₒ (112,113) of the MAU trunk cable are connected to the BLOOP cable 1202 by way of a MIC 106 and a BLOOP connector 1201. Each station 902 is connected to the MAU 901 using an adapter 903 in the "external TCU" mode. Therefore, in this figure, nine adapters are used: five (shown as 1002) in the "internal TCU" mode, and four (shown as 903) in the "external TCU" mode.

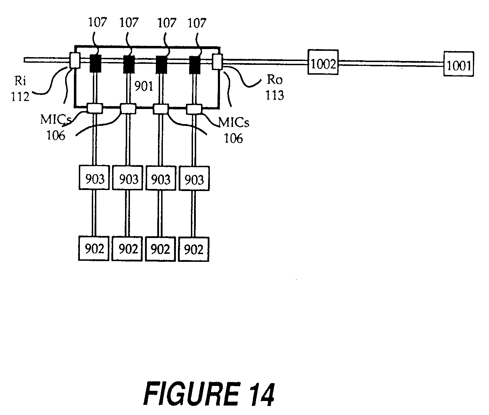

Fig. 14 shows how the adapter can be employed to add a station 1001 to a network containing a single, fully-populated MAU 901, by attaching the adapter 1002 to the Rₒ 113 of the MAU 901. In this configuration, four adapters 903 would use the "external TCU" mode, and one adapter 1002 would use the "internal TCU" mode.

## Claims

1. An apparatus for interfacing a station in a token ring network that includes a communications processor that generates a first signal to selectively command insertion of the station into the network, and also includes a ring interface connected to the communications processor, that has a transmitting terminal and a receiving terminal,
characterized by a relay circuit, connected to the transmitting terminal and the receiving terminal of the ring interface, that selectively inserts and bypasses the station with respect to the network.

2. The apparatus according to claim 1, characterized in that the relay circuit is responsive to the first signal for inserting and bypassing with respect to the network.

3. The apparatus according to claim 1, further characterized by:
a host systems interface that generates a second signal indicative of one of two operating modes, where the two operating modes include a first operating mode for operation with an external trunk coupling unit, and a second operating mode for operation without an external trunk coupling unit; and by
a logic circuit connected to receive the first signal and the second signal, that generates a third signal that activates the relay circuit.

4. The apparatus according to claim 3, characterized in that the relay circuit includes:
a first terminal connected to the receiving terminal of the ring interface;
a second terminal connected to the transmitting terminal of the ring interface;
a third terminal;
a fourth terminal; and
a relay that is operable in an activated state in which the first terminal is electrically connected to the third terminal and the second terminal is electrically connected to the fourth terminal, and in a deactivated state in which the first terminal is connected to the second terminal and the third terminal is connected to the fourth terminal, and the operating state of the relay is determined by the state of the third signal.

5. The apparatus according to claim 4, characterized by a switch, connected to receive the third signal, that selects between the activated state and deactivated state of the relay in response to the third signal.

6. The apparatus according to claim 5, characterized in that:
the ring interface is connected to receive the first signal; and
the ring interface supplies a DC voltage between the first terminal and the second terminal in response to the first signal commanding insertion of the station.

7. The apparatus according to claim 5, characterized in that:
the logic circuit includes an output line that selectively provides the first signal depending upon the state of the second signal;
the ring interface is connected to the output line of the logic circuit; and
the ring interface supplies a DC voltage between the first terminal and the second terminal in response to the output line of the logic circuit commanding insertion of the station.

8. The apparatus according to claim 7, characterized in that the logic circuit provides the first signal at the output line only when the second signal indicates the first mode of operation and sets the third signal to activate the switch whenever the first signal is active, and also sets the third signal to activate the switch whenever the second signal indicates the first mode of operation, and sets the third signal to deactivate the switch whenever both the first signal is inactive and the second signal indicates the second mode of operation.

9. The apparatus according to claim 8, characterized in that the logic circuit includes:
an inverter that has an input connected to receive the second signal, and an output;
an enable gate that has an input connected to receive the first signal, a gate terminal connected to the output of the inverter, and an output connected to the output line of the logic circuit, where the enable gate provides the signal at its input to its output only when the gate terminal indicates the first mode of operation;
a one-shot circuit, that has an input connected to receive the first signal, that generates a fourth signal indicating whether the first signal is active;
a NAND gate that has a first input connected to receive the fourth signal, a second input connected to the output of the inverter, and an output; and
an AND gate that has a first input connected to the output of the NAND gate, a second input connected to the output of the inverter, and an output, that generates the third signal.

10. The apparatus according to claim 9, characterized in that the third and fourth terminals of the relay circuit are capable of connection to either an interface connector for use with a network that has a star topology, or a loop connector for use with a network that has a loop topology.

11. The apparatus according to claim 10, characterized by an impedance-matching circuit, connected to the third and fourth terminals of the relay circuit, that selectively matches the impedance of the network.

12. The apparatus according to claim 11, characterized in that the switch includes a solenoid that has a first terminal connected to receive the third signal and a second terminal connected to a voltage source.

13. The apparatus according to claim 11, characterized in that the switch includes a relay coil that has a first terminal connected to receive the third signal and a second terminal connected to a voltage source.

14. A cable assembly that includes at least one station connector for attachment to a station, and a ring connector for attachment to a network ring line, each connector having first and second terminals, characterized in that:
the second terminal of the ring connector is connected to the second terminal of the first station connector;
the first terminal each station connector except the last station connector is connected to the second terminal of the next station connector; and
the first terminal of the last station connector is connected to the first terminal of the ring connector.

15. The cable assembly according to claim 14, characterized in that the first and second terminals of each station connector are self-shorting.

16. A method of inserting a station into a token ring network using an adapter, characterized in that:
(a) a first signal is generated to command insertion of the station into the network;
(b) a second signal is generated to indicate whether an external trunk coupling unit is available;
(c) the first and second signals are supplied to the adapter; and
(d) a relay is activated in response to the first signal to electrically connect the adapter to the network.

17. The method according to claim 16, characterized in that, if the second signal indicates that an external trunk coupling unit is available, a DC voltage is sent to the external trunk coupling unit through the attached line to cause the external trunk coupling unit to insert the station.
